Europäisches Patentamt

European Patent Office

Office européen des brevets

(19)

(11) Numéro de publication: **0 151 082**
**B1**

(12) **FASCICULE DE BREVET EUROPEEN**

(45) Date de publication du fascicule du brevet:
**11.05.88**

(51) Int. Cl.⁴: **G 21 C 7/10**

(21) Numéro de dépôt: **85400153.4**

(22) Date de dépôt: **30.01.85**

(54) Dispositif de pilotage du coeur d'un réacteur nucléaire.

(30) Priorité: **30.01.84 FR 8401360**

(43) Date de publication de la demande:
**07.08.85 Bulletin 85/32**

(45) Mention de la délivrance du brevet:
**11.05.88 Bulletin 88/19**

(84) Etats contractants désignés:
**AT BE CH DE GB IT LI SE**

(56) Documents cités:
**EP - A - 0 111 435**
**FR - A - 2 106 373**
**FR - A - 2 168 564**
**FR - A - 2 459 535**

**REVUE GENERALE NUCLEAIRE, no. 5,**
**septembre/octobre 1982, pages 443-448, Paris, FR; R.**
**ASSEDO et al.: "Conséquences du suivi du réseau pour**
**les composants mécaniques de la chaudière"**

(73) Titulaire: **FRAMATOME ET CIE., Tour Fiat 1, Place de la**
**Coupole, F-92400 Courbevoie (FR)**

(72) Inventeur: **Leroy, Claude, 51 bis, Grande rue,**
**F-91190 Lardy (FR)**
Inventeur: **Millot, Jean-Paul, 1, allée des Roitelets,**
**F-78340 Elancourt (FR)**
Inventeur: **Desfontaines, Guy, 18, rue jean Jaurès,**
**F-92800 Puteaux (FR)**

(74) Mandataire: **Fort, Jacques et al, CABINET**
**PLASSERAUD 84, rue d'Amsterdam, F-75009 Paris (FR)**

# Description

L'invention concerne un dispositif de pilotage du cœur d'un réacteur nucléaire au moyen de grappes à fonctions diversifiées, telles que des grappes de contrôle ou des grappes de variation de spectre.

Pour améliorer les performances des réacteurs nucléaires à eau sous pression, en ce qui concerne l'utilisation du combustible, on sait utiliser des procédés de conduite de ces réacteurs faisant intervenir une variation du spectre d'énergie des neutrons dans le cœur du réacteur au cours du cycle de fonctionnement de celui-ci. Pour celà, on prévoit par exemple pendant la première partie du cycle de fonctionnement du réacteur, l'introduction dans le cœur de grappes de crayon en matériau absorbant les neutrons, de préférence en matériau fertile susceptible de se transformer en matière fissile sous l'effet du bombardement neutronique. On produit ainsi un durcissement du spectre des neutrons à la fois par diminution du volume du modérateur dans le cœur et par absorption des neutrons de faible énergie. Dans une seconde partie du cycle de fonctionnement du réacteur, on extrait les grappes de crayons absorbants du cœur du réacteur et l'on consomme le matériau fissile formé au cours de la première phase. On pourra se reporter par exemple aux demandes EP-A1-0108019 et EP-A1-0108020 publiées le 09.05.84, postérieurement a la date de priorité de la présente demande.

Dans de tels réacteurs, on utilise alors conjointement des grappes de crayons absorbant les neutrons, que l'on peut insérer plus ou moins dans les assemblages constituant le cœur du réacteur pour le contrôle de celui-ci et des grappes de variation de spectre qui sont totalement insérées dans les assemblages combustibles constituant le cœur du réacteur pendant la première partie du cycle de fonctionnement de celui-ci. En particulier les grappes de contrôle et les grappes de variation de spectre peuvent être associées aux mêmes assemblages du cœur du réacteur, avec une motorisation commune.

On peut citer à titre d'exemple la demande de brevet EP-A1-0111435 publiée le 20.06.84, postérieurement a la date de priorité de la présente demande qui décrit un dispositif comportant des grappes de contrôle et des grappes de variation de spectre qui sont coaxiales, avec chacune une symétrie polaire de répartition des crayons dans l'assemblage combustible auquel elles sont associées. Les déplacements des grappes se font à l'aide de deux tiges de commande coaxiales, mobiles en translation dans une enceinte étanche et munies de moyens d'accrochage et de verrouillage de ces tiges en diverses positions. Les moyens de déplacement de la tige de commande des grappes de contrôle sont des moyens classiques constitués de bobinages électromagnétiques et de cliquets.

La tige de commande des grappes de variation de spectre, montée coaxialement à l'intérieur de la tige de commande des grappes de contrôle constitue un piston dans cette tige actionné pour son mouvement vers le haut par ouverture d'une vanne de décompression en partie haute de l'enceinte étanche dans laquelle se déplacent les tiges de commande. La tige de commande des grappes de variation de spectre en position haute peut être raccrochée à la tige de commande des grappes de contrôle par des doigts s'engageant dans une rainure de la tige de commande des grapper de variation de spectre.

Si un tel dispositif de pilotage donne des résultats satisfaisants, il présente cependant les inconvénients suivants: les déplacements des tiges ne sont pas totalement indépendants puisque la tige de commande des grappes de variation de spectre subit les déplacements de la tige de commande des grappes de contrôle. Ceci présente l'inconvénient d'insérer partiellement les grappes de variation des spectre même quand on ne désire pas les insérer.

On connaît également le brevet français FR.A-2.168.564 qui décrit des assemblages combustibles auxquels sont associés des tubes-guides dans lesquels coulissent individuellement une pluralité de tiges de commande de grappes, les crayons de ces grappes étant répartis en symétrie polaire vis-à-vis de la maille des crayons de l'assemblage combustible. Si un tel dispositif permet une indépendance totale des guidages et des déplacements des diverses tiges de commande ainsi qu'une répartition régulière des crayons dans l'assemblage combustible, il présente cependant l'inconvénient d'un encombrement très important, dûs en particulier aux moyens de commande et de guidage associés à chacune des tiges de commande, situés en dedans et en dehors de la cuve. (La motorisation hydraulique et électromécanique de ces tiges est décrite dans le brevet français FR.A-2.232.820).

La présente invention remédie aux inconvénients précités: elle vise un dispositif de pilotage du cœur d'un réacteur nucléaire au moyen de grappes à fonctions diversifiées qui ne soit pas encombrant et dans lequel les tiges de commande de ces grappes et les guidages associés soient totalement indépendants les uns des autres.

Plus précisément, l'invention concerne un dispositif de pilotage du cœur d'un réacteur nucléaire comportant une cuve renfermant un fluide sous pression dans lequel baigne le cœur comprenant des assemblages combustibles disposés verticalement, constitué d'un premier jeu de grappes destinées à être guidées et insérées plus ou moins profondément dans certains assemblages et d'un deuxième jeu de grappes destinées à être guidées et insérées complètement dans certains assemblages pendant une partie seulement du cycle de fonctionnement du cœur, chacune des grappes étant constituée d'un ensemble de crayons disposés parallèlement les uns aux autres, susceptibles de se déplacer verticalement dans les assemblages et à l'intérieur d'une structure unique de guidage de crayons de grappes, fixés à un pommeau susceptible de se déplacer à l'intérieur d'une cheminée de guidage positionnée à l'intérieur de la structure de guidage et prolongé par une tige de commande déplaçable verticalement, dans lequel les moyens de déplacement des tiges de commande des grappes du premier jeu sont des moyens classiques à bobines électromagnétiques et cliquets et les moyens de déplacement des tiges de commande des grappes du deuxième jeu sont des moyens hydrauliques, ladite tige de commande se déplaçant dans une enceinte étanche communiquant avec la cuve et susceptible d'être mise en dépression, dans lequel des moyens sont prévus pour verrouiller la tige de commande des grappes du deuxième jeu en position haute et pour la déverrouiller, et dans lequel à un assemblage combustible sur deux sont associées deux grappes dissymétriques, une grappe du premier jeu et une grappe du deuxième jeu, dont les cheminées de guidage sont disposées symétriquement par rapport á l'axe de la structure de guidage associée audit assemblage, les moyens de guidage et de déplacement des deux pommeaux de grappes étant totalement indépendants les uns des autres.

De préférence, les structures de guidage associées à ces assemblages combustibles sont de forme polygonale.

Selon une caractéristique particulière de l'invention, l'ensemble formé par le pommeau et la tige de commande de chaque grappe est muni de patins de guidage dudit ensemble à l' intérieur de la cheminée dans laquelle il se déplace.

Selon une autre caractéristique de l'invention, les cheminées de guidage sont maintenues positionnées à l'intérieur de la structure de guidage au moyen de cartes de guidage perpendiculaires à l'axe de la structure de guidage et munies d'au moins une entretoise verticale s'étendant le long de l'axe de la structure de guidage.

Dans un mode préféré de réalisation de l'invention, les moyens de verrouillage de la tige de commande des grappes du deuxième jeu en position haute et de déverrouillage de cette tige sont constitués de:

– deux cliquets dont les axes sont fixés à un carter fixé à l'intérieur de ladite enceinte étanche et qui sont susceptibles de venir s'engager dans une gorge réalisée dans la tige de commande,

– une douille rotative munie de deux cames dont l'une est susceptible d'ouvrir les cliquets et l'autre est susceptible de fermer les cliquets, et

– des moyens pour faire tourner la douille rotative quand la tige de commande se déplace axialement.

De préférence, les moyens pour faire tourner la douille rotative quand la tige de commande se déplace axialement sont constitués d'une douille mobile en translation axiale, munie de deux pions susceptibles de coopérer avec des rampes inclinées usinées dans la douille rotative et d'un épaulement sur lequel vient accoster un chanfrein de la tige de commande quand celle-ci se déplace vers le haut.

On va maintenant décrire à titre d'exemple non limitatif, en se référant aux figures jointes en annexe, un mode de réalisation d'un dispositif de pilotage selon l'invention, dans lequel les grappes à fonctions diversifiées sont des grappes de contrôle et des grappes de variation de spectre.

La figure 1 est une coupe axiale d'un assemblage combustible auquel sont associées deux grappes, une grappe de contrôle et une grappe de variation de spectre susceptibles de se déplacer axialement à l'intérieur d'une même structure de guidage, conformément à la présente invention.

La figure 2 est une coupe radiale d'un cœur de réacteur nucléaire à hauteur de la structure de guidage des grappes dont un assemblage sur deux est analogue à l'assemblage de la figure 1.

La figure 3 est, à une échelle plus grande, une coupe suivant III–III de la figure 1.

La figure 4 représente, en coupe longitudinale, les moyens d'accrochage et de verrouillage de la tige de commande de la grappe de variation de spectre de la figure 1 en position haute et de déverrouillage de cette tige. Sur cette figure, la tige de commande est en position déverrouillée, les cliquets étant en position ouverte.

La figure 5 est une figure analogue à la figure 4, dans laquelle les cliquets sont en position fermée mais la tige n'est pas complètement verrouillée.

La figure 6 montre les cliquets et la tige de commande de la figure 5, avec la tige de commande complètement verrouillée.

La figure 7 représente le cliquet et la tige de la figure 5, avec le cliquet ouvert mais avant la descente de la tige de commande dans l'assemblage combustible auquel elle est associée.

La figure 8 est une coupe suivant VIII–VIII de la figure 5, réalisée au niveau de la came supérieure de la douille rotative permettant l'ouverture des cliquets.

La figure 9 est une coupe suivant IX–IX de la figure 5 réalisée au niveau de la came inférieure permettant la fermeture des cliquets.

La figure 10 est une coupe suivant X–X de la figure 5 réalisée au niveau des axes des cliquets.

La figure 11 représente schématiquement les profils de la came haute et de la came basse en superposition.

La figure 12 est une projection développée sur un plan de la rampe inclinée usinée dans la douille rotative de la figure 5.

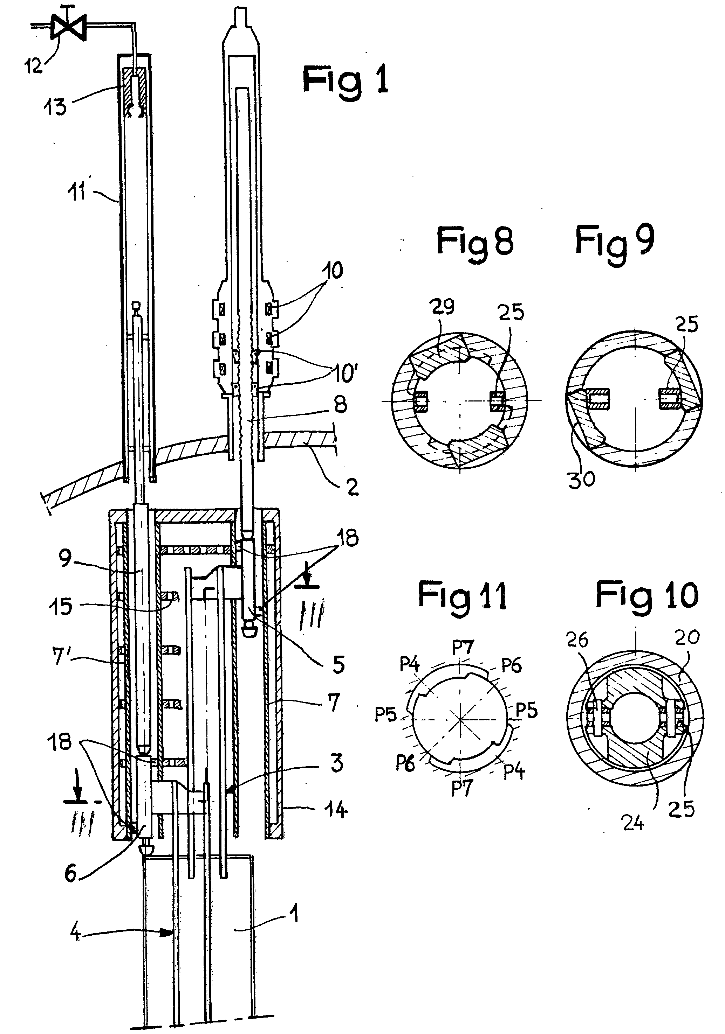

On se reportera tout d'abord à la figure 1. La figure 1 montre un assemblage combustible 1 placé de façon classique à l'intérieur d'une cuve 2 d'un réacteur nucléaire à eau sous pression. Cet assemblage 1 est équipé de deux grappes 3 et 4, la grappe 3 étant une grappe de contrôle à crayons absorbants et la grappe 4 étant une grappe de variation de spectre en matériau fertile par exemple. Les crayons de chaque grappe sont fixés à un pommeau, repéré par 5 en ce qui concerne la grappe 3 et repéré par 6 en ce qui concerne la grappe 4. Les pommeaux 5 et 6 sont logés chacun dans un tube fendu ou cheminée de guidage, respectivement 7 et 7', et sont susceptibles de se déplacer en translation le long de l'axe de ces cheminées de guidage. Dans ce but, ils sont placés chacun à l'extrémité d'une tige de commande, repérée par 8 pour le pommeau 5 et par 9 pour le pommeau 6. La tige de commande 8 est munie de moyens de déplacement classiques à bobines électromagnétiques 10 et cliquets 10' analogues aux moyens décrits dans la demande de brevet EP-A1-0111435 citée plus haut pour les déplacements de la tige de commande. Ces moyens classiques ne seront donc pas décrits de façon plus détaillée dans la présente demande.

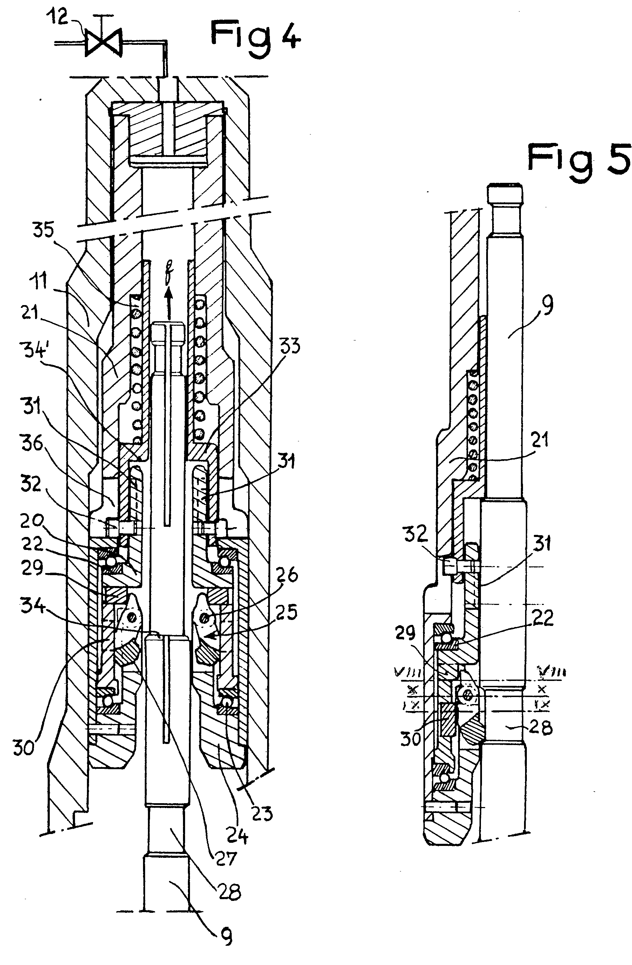

La tige de commande 9 est susceptible de se déplacer à l'intérieur d'une enceinte étanche 11 communiquant avec la cuve 2, sous l'action d'une force hydraulique ascensionnelle due à la dépressurisation de l'enceinte étanche 11, par ouverture d'une électrovanne 12, ou sous l'action de son poids quand la vanne 12 est refermée. Des moyens d'accrochage et de verrouillage de l'extrémité de la tige de commande 9 opposée au pommeau 6 sont prévus en 13 et seront décrits de façon plus détaillée sur les figures 4 à 12.

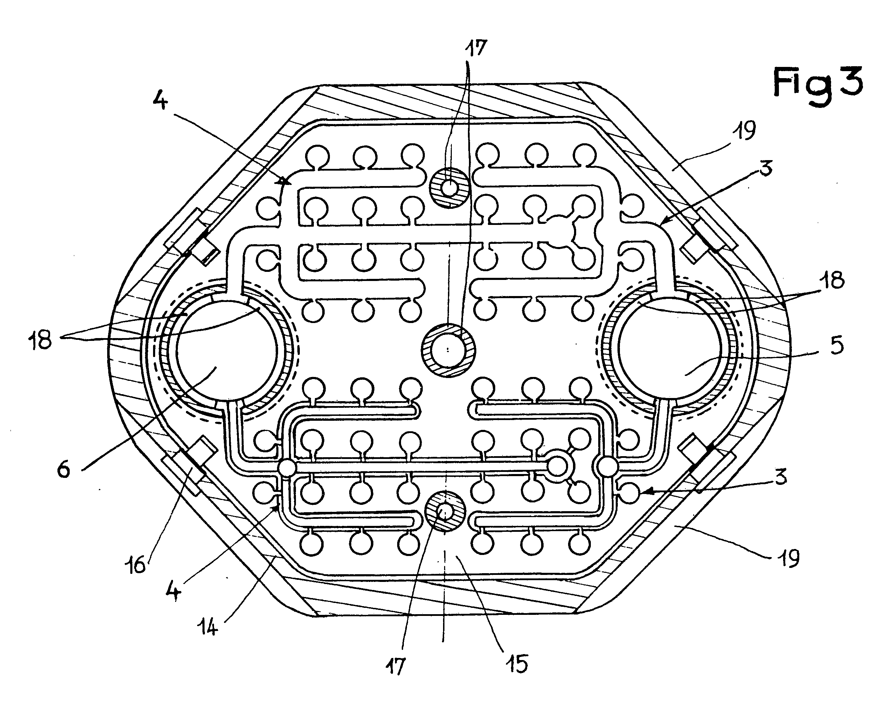

Les cheminées de guidage 7 et 7' sont positionnées à l'intérieur d'une structure de guidage unique 14 au-dessus de l'assemblage combustible 1 au moyens de cartes de guidage 15 perpendiculaires à l'axe de la structure de guidage 14 et placées sur plusieurs niveaux à l'intérieur de celle-ci. Comme on peut le voir sur la figure 3, ces cartes de guidage 15 sont maintenues par des pions 16 qui autorisent un jeu périphérique entre les cartes 15 et le carter extérieur de la structure de guidage 14. On voit en outre sur cette figure que, en partie centrale de la structure de guidage 14, trois entretoises 17 de renfort maintiennent l'espacement des cartes de guidage 15.

Si on se reporte à nouveau à la figure 1, on constate que les pommeaux 5 et 6 sont munis de couples de patins 18 qui assurent d'une part la reprise des efforts dûs au porte-à-faux et qui d'autre part limitent les déplacements et les déformations imposés aux crayons des grappes 3 et 4 et empêchent ainsi l'usure de ceux-ci au contact des cartes de guidage 15.

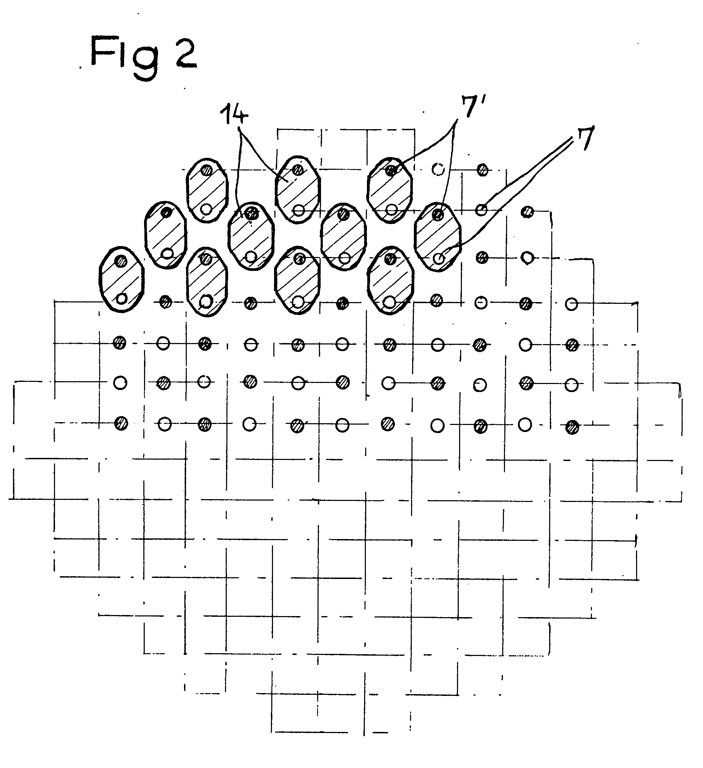

On se reportera maintenant à la figure 2 sur laquelle on a représenté l'ensemble du cœur du réacteur équipé, pour un assemblage sur deux, de grappes telles que 3 et 4. On voit sur cette figure que les structures de guidage 14 associées à ces assemblages 1 sont de forme hexagonale. Les cercles hachurés représentent les cheminées de guidage 7' des grappes 4 de variation de spectre et les cercles non hachurés représentent les cheminées de guidage 7 des grappes de contrôle 3. Les assemblages du cœur intercalés entre les assemblages 1 auxquels sont associées les structures de guidage 14 de forme hexagonale ne reçoivent ni crayons absorbants ni crayons fertiles mais des grappes de bouchons non représentées; ces grappes empêchent le by-pass du cœur par les assemblages qui les reçoivent.

On se reportera de nouveau à la figure 3 qui montre dans une structure de guidage 14, les pommeaux 5 et 6 auxquels sont fixées les grappes 3 et 4. On voit que quatre parois 19 du carter de la structure de guidage 14 sont amincies sur leurs faces externes pour agrandir les espaces inter-carter de transfert et circulation du réfrigérant. Chaque grappe 3 ou 4 présente un plan de symétrie contenant l'axe joignant les deux pommeaux 5 et 6 mais ne présente pas de symétrie polaire par rapport à chaque pommeau 5 ou 6. Les grappes 3 et 4 occupent avec les pommeaux 5 et 6 tout le volume à l'intérieur de la structure de guidage 14.

On se reportera maintenant à la figure 4 qui montre le système d'accrochage et de verrouillage de la tige de commande 9 de variation de spectre en partie haute de l'enceinte étanche 11 et de déverrouillage de cette tige. Ces moyens comprennent une douille creuse cylindrique 20 mobile en rotation autour de son axe, logée dans un carter 21 à l'intérieur duquel elle peut tourner grâce à deux roulements à billes 22 et 23, le carter 21 étant relié fixement à l'enceinte sous pression 11. La partie basse 24 du carter 21 se loge à l'intérieur de la douille 20 et porte un couple de cliquets 25 basculant chacun autour d'un axe 26 solidaire de la partie basse 24. Ces cliquets 25 portent à leur partie inférieure un ergot déporté 27 qui est susceptible de se loger dans une gorge circulaire 28 de la tige de commande 9.

Deux cames circulaires 29 et 30 sont susceptibles de faire basculer les cliquets 25 autour de leurs axes 26 si la douille creuse rotative 20 tourne autour de son axe.

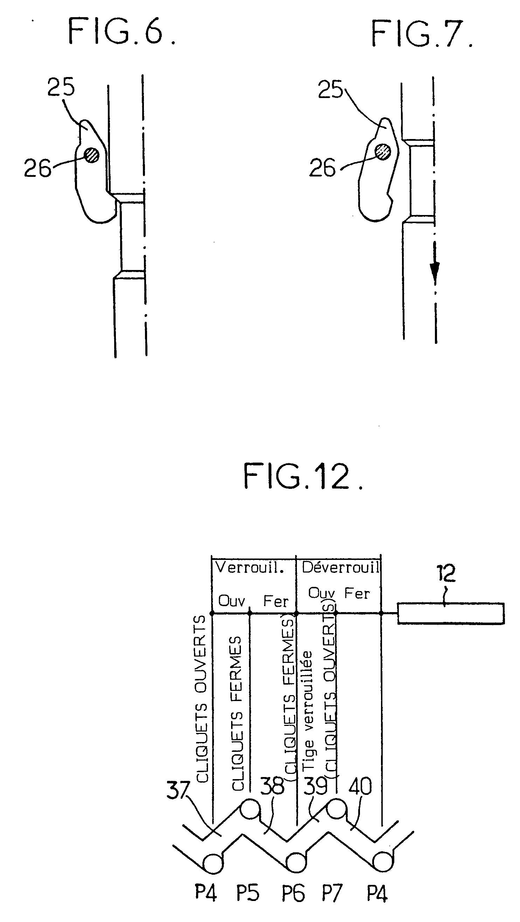

Cette douille 20 peut tourner car elle est munie dans sa partie haute de rampes inclinées repérées dans leur ensemble par 31, que l' on peut voir plus aisément sur la figure 12; ces rampes inclinées 31 coopèrent avec des pions 32 solidaires d'une douille mobile en translation 33 le long de l'axe de l'enceinte étanche 11 quand la tige de commande 9 s'élève lors de l'ouverture de l'électrovanne 12. La tige de commande 9 est en effet munie d'un chanfrein 34 qui vient accoster la douille 33 et pousser celle-ci vers le haut quand elle est soumise à la force hydraulique ascensionnelle provoquée par la mise en dépression de l'enceinte étanche 11. La douille 33 est rappelée axialement par un ressort 35 pour exercer un effort d'amortissement sur la douille 33, de sens opposé à celui exercé par la tige de commande 9. Les rampes inclinées 31 usinées dans la douille rotative sont telles que les courses axiales des pions 32 dans un sens ou dans l'autre provoquent la rotation de la douille 20 et par conséquent des cames circulaires 29 et 30. Des lumières 36 ont d'autre part été usinées dans le carter fixe 21 pour permettre le mouvement de translation des pions 32 et s'opposer à leur rotation.

Sur la figure 4, la tige de commande 9 est en train de monter grâce à la force ascensionnelle due à l'ouverture de l'électrovanne 12, selon la flèche f. La gorge 28 est encore à un niveau inférieur à celui des cliquets 25. Ceux-ci sont bien sûr ouverts pour laisser le passage de la tige de commande 9 et la douille 20 ne tourne pas puisque les pions 32 sont encore immobiles. Quand le chanfrein 34 accoste la douille 33 et met donc en translation les pions 32, ceux-ci se déplacent dans la partie 37 des rampes inclinées 31 et la douille 20 se met à tourner. Quand les pions 32 ont parcouru toute la longueur de la rampe 37, le dispositif de verrouillage selon l'invention se trouve tel qu'il est représenté sur la figure 5. Les cliquets 25 ont été fermés au moyen de la came 30 et les ergots 27 se sont logés dans la gorge circulaire 28 usinée dans la tige de commande 9.

On pourra se reporter aux figures 8, 9, 10 et 11 qui permettent de bien comprendre comment agissent les cames 29 et 30 pour ouvrir ou fermer les cliquets 25. La figure 8 est une coupe suivant VIII–VIII de la figure 5. Elle montre le profil de la came supérieure 29 alors que la figure 9, qui est une coupe suivant IX–IX de la figure 5 montre le profil de la came inférieure 30. Sur la figure 11, on a superposé le profil de ces deux cames; cette figure permet de bien comprendre quelle came agit sur les cliquets 25 à chaque mouvement de rotation de la douille rotative 20. La figure 10 est une coupe selon X–X de la figure 5 et montre les cliquets 25 avec leurs axes 26 logés dans le carter 21.

Quand la tige de commande 9 se trouve dans la position de la figure 5, on ferme l'électrovanne 12 afin que la tige 9 descende lentement, puisque le fluide sous pression déplacé lors de la chute de la tige 9 est laminé dans l'espace de très faible dimension ménagé entre cette tige 9 et la paroi interne de l'enceinte étanche 11. La tige de commande 9 vient alors se placer par rapport à l'axe 26 des cliquets 25 dans la position de la figure 6: elle est alors verrouillée en position haute. Entre les figures 5 et 6, les pions 32 se sont déplacés le long de la rampe 38 de la figure 12; ils se trouvent sur cette figure au niveau indiqué 6, c'est-à-dire correspondant à la figure 6, dans lequel la tige est verrouillée. (Les niveaux indiqués respectivement 4, 5 et 7 sur la figure 12 correspondent, de la même façon, aux positions des figures 4, 5 ou 7).

Quand on veut introduire la grappe 4 dans l'assemblage 1, afin de faire varier le spectre des neutrons pendant la prmière partie du cycle de fonctionnement par exemple, on ouvre à nouveau l'électrovanne 12 afin de faire monter la tige de commande 9 au moyen de la force ascensionnelle produite par la mise en dépression de l'enceinte étanche 11. La tige de commande 9 vient à nouveau accoster par son chanfrein 34 la douille 33. Le pion 32 se déplace alors le long de la rampe 39 et fait tourner la douille rotative 20 de telle sorte que la came 29 vienne s'appuyer sur la partie supérieure des cliquets 25 qui se trouvent ainsi en position ouverte comme représenté sur la figure 7. Les pions 32 se trouvent sur la figure 12 au niveau indiqué par 7. On ferme alors l'électrovanne 12 afin de provoquer la descente de la tige de commande 9. Le dispositif se retrouve dans la position de la figure 4, les pions 32 s'étant déplacés le long de la rampe 40.

On a porté sur la figure 11 les numéros 4, 5, 6, 7 correspondant aux numéros indiqués sur la figure 12. On voit donc ainsi la position des cames 29 et 30 par rapport aux cliquets 25 dans chaque position repérée sur la figure 12.

Le dispositif de pilotage que nous venons de décrire permet d'insérer complètement les grappes 4 de variation de spectre pendant une partie du cycle de fonctionnement du cœur, et de maintenir cette grappe 4 verrouillée en position haute pendant les autres parties du cycle de fonctionnement alors que les grappes de contrôle 3 peuvent être insérées plus ou moins profondément dans le cœur. Les mouvements de ces deux grappes 3 et 4 sont totalement indépendants l'un de l'autre. Par conséquent, lorsque l'on insère légèrement la grappe 3 dans l'assemblage 1, on n'insère nullement les crayons de la grappe 4 dans l'assemblage 1.

Le dispositif de pilotage selon l'invention n'est pas encombrant puisqu'il ne comporte que deux tiges de commande 8 et 9. On manipule tous les crayons de variation de spectre constituant la grappe 4 au moyen d'un dispositif de commande unique (9, 13) et tous les crayons de contrôle constituant la grappe 3 au moyen d'un dispositif de commande (8, 10, 10') également unique. Les implantations de ces dispositifs de commande sur le couvercle de la cuve 2 représentent une maille régulière compatible avec les servitudes d'installation, de construction et de ventilation de ces dispositifs.

En outre, les profils extérieurs de chacune des structures de guidage 14 sont tels qu'ils autorisent les transferts horizontaux du réfrigérant sans trop de perte de charge vers les sorties radiales réparties sur la cuve.

Bien entendu, l'invention n'est pas limitée au mode de réalisation qui a été décrit uniquement à titre d'exemple mais elle couvre également les autres modes qui n'en différeraient que par des détails, par des variantes d'exécution ou par l'utilisation de moyens équivalents, dans le cadre des revendications.

Ainsi les moyens pour accrocher et verrouiller la tige de commande des grappes de variation de spectre pourraient bien sûr être différents et comporter par exemple uniquement une douille mobile en translation agissant directement sur les cliquets.

Le couple de patins 18 pourrait ne pas être porté uniquement par le pommeau 5 ou 6, mais pourrait être constitué d'un premier patin placé sur le pommeau 5 ou 6 et d'un deuxième patin placé sur la tige de commande 8 ou 9 qui prolonge le pommeau 5 ou 6.

Enfin, les grappes 4 du deuxième jeu pourraient être d'autres grappes que des grappes de variation de spectre, par exemple des grappes de crayons passifs.

**Revendications**

1. Dispositif de pilotage du cœur d'un réacteur nucléaire comportant une cuve renfermant un fluide sous pression dans lequel baigne le cœur comprenant des assemblages combustibles disposés verticalement, constitué d'un premier jeu de grappes (3) destinées à être guidées et insérées plus ou moins profondément dans certains assemblages et d'un deuxième jeu de grappes (4) destinées à être insérées complètement dans certains assemblages pendant une partie seulement du cycle de fonctionnement du cœur, chacune

des grappes (3, 4) étant constituée d'un ensemble de crayons disposés parallèlement les uns aux autres, susceptibles de se déplacer verticalement dans les assemblages et à l'intérieur d'une structure unique de guidage de crayons de grappes (14), fixés à un pommeau (5, 6) susceptible de se déplacer à l'intérieur d'une cheminée de guidage (7, 7') positionnée à l'intérieur de la structure de guidage et prolongé par une tige de commande (8, 9) déplaçable verticalement, dans lequel les moyens de déplacement des tiges de commande (8) des grappes du premier jeu sont des moyens classiques à bobines électromagnétiques et cliquets et les moyens de déplacement des tiges de commande (9) des grappes du deuxième jeu sont des moyens hydrauliques, ladite tige de commande (9) se déplaçant dans une enceinte étanche (11) communiquant avec la cuve et susceptible d'être mise en dépression, dans lequel des moyens sont prévus pour verrouiller la tige de commande des grappes du deuxième jeu en position haute et pour la déverrouiller, et dans lequel à un assemblage combustible (1) sur deux sont associées deux grappes dissymétriques (3, 4), une grappe du premier jeu (3) et une grappe du deuxième jeu (4) dont les cheminées de guidage (7, 7') sont disposées symétriquement par rapport à l'axe de la structure de guidage (14) associée audit assemblage (1), les moyens de guidage et de déplacement des deux pommeaux de grappes (8, 10, 10'; 9, 13) étant totalement indépendants les uns des autres.

2. Dispositif de pilotage selon la revendication 1, caractérisé par le fait que les structures de guidage (14) associées à ces assemblages combustibles (1) sont de forme polygonale.

3. Dispositif de pilotage selon l'une des revendications 1 ou 2, caractérisé par le fait que l'ensemble formé par le pommeau et la tige de commande (6, 9; 5, 8) de chaque grappe (3, 4) est muni d'au moins un couple de patins (18) de guidage dudit ensemble à l'intérieur de la cheminée (7, 7') dans laquelle il se déplace.

4. Dispositif selon l'une des revendications 1, 2 ou 3, caractérisé par le fait que les cheminées de guidage (7, 7') sont maintenues positionnées à l'intérieur de la structure de guidage (14) au moyen de cartes de guidage (15) perpendiculaires à l'axe de la structure de guidage (14) et munies d'au moins une entretoise (17) verticale s'étendant le long de l'axe de la structure de guidage (14).

5. Dispositif selon l'une des revendications précédentes, caractérisé par le fait que les moyens de verrouillage (13) de la tige de commande (9) de grappes (4) du deuxième jeu en position haute et de déverrouillage de cette tige sont constitués de:
– deux cliquets (25) dont les axes (26) sont fixés à un carter (21) fixé à l'intérieur de ladite enceinte étanche (11) et qui sont susceptibles de venir s'engager dans une gorge (28) réalisée dans la tige de commande (9),
– une douille rotative (20) munie de deux cames (29 et 30) dont l'une (29) est susceptible d'ouvrir les cliquets (25) et l'autre (30) est susceptible de fermer les cliquets (25), et
– des moyens (31, 32) pour faire tourner la douille rotative (20) quand la tige de commande (9) se déplace axialement.

6. Dispositif selon la revendication 5, caractérisé par le fait que les moyens pour faire tourner la douille rotative (20) quand la tige de commande (9) se déplace axialement sont constitués d'une douille mobile en translation axiale (33), munie de deux pions (32) susceptibles de coopérer avec des rampes (31) inclinées, usinées dans la douille rotative (20) et munie d'un épaulement (34') sur lequel vient accoster un chanfrein (34) de la tige de commande (9) quand celle-ci se déplace vers le haut.

**Patentansprüche**

1. Steuervorrichtung für den Kern eines Kernreaktors, der ein Gefäss aufweist, das eine unter Druck stehende Flüssigkeit enthält, in welcher der Kern badet, der vertikal angeordnete Brennstoffbündel aufweist, mit einer ersten Schar von Stabbündeln (3), welche in vorbestimmten Brennstoffbündeln geführt und in diese mehr oder weniger tief einführbar sind, und einer zweiten Schar von Stabbündeln (4), die lediglich während eines Abschnittes des Betriebszyklus des Kernes in vorbestimmte Brennstoffbündel vollständig einführbar sind, wobei jedes Stabbündel (3, 4) durch einen Satz von parallel zueinander angeordneten Stäben gebildet ist, die in den Brennstoffbündeln und im Inneren einer gemeinsamen Führungsstruktur (14) für die Stabbündel vertikal bewegbar und an einem Kopf (5, 6) fixiert sind, der im Inneren einer Führungsbahn (7, 7') bewegbar ist, welche im Inneren der Führungsstruktur angeordnet und durch eine vertikal bewegbare Steuerstange (8, 9) verlängert ist, wobei die Mittel zum Bewegen der Steuerstangen (8) der Stabbündel der ersten Schar klassische Mittel mit elektromagnetischen Spulen und Klinken und die Mittel zum Bewegen der Steuerstangen (9) der Stabbündel der zweiten Schar hydraulische Mittel sind und die letztgenannte Steuerstange (9) sich in einer dichten Hülle (11) bewegt, die mit dem Gefäss in Verbindung steht und unter Unterdruck gesetzt werden kann, wobei Mittel vorgesehen sind, um die Steuerstange der Stabbündel der zweiten Schar in der angehobenen Position zu verriegeln und zu entriegeln, wobei jedem zweiten Brennstoffbündel (1) zwei asymmetrische Stabbündel (3, 4) zugeordnet sind, ein Stabbündel (3) der ersten Schar und ein Stabbündel (4) der zweiten Schar, deren Führungsbahnen (7, 7') bezüglich der Achse der dem Brennstoffbündel zugeordneten Führungsstruktur (14) symmetrisch angeordnet sind, und wobei die Mittel zum Führen und Bewegen der beiden Köpfe (8, 10, 10'; 9, 13) der Stabbündel voneinander vollkommen unabhängig sind.

2. Steuervorrichtung nach Anspruch 1, dadurch gekennzeichnet, dass die den Brennstoffbündeln (1) zugeordneten Führungsstrukturen (14) polygonale Form haben.

3. Steuervorrichtung nach Anspruch 1 oder 2, dadurch gekennzeichnet, dass die aus Kopf und Steuerstange gebildete Anordnung (6, 9; 5, 8) jedes Stabbündels (3, 4) mit zumindest einem Paar von Schuhen (18) zum Führen der Anordnung im Inneren der Bahn (7, 7') versehen ist, in welcher sie sich bewegt.

4. Steuervorrichtung nach einem der Ansprüche 1 bis 3, dadurch gekennzeichnet, dass die Führungsbahnen (7, 7') im Inneren der Führungsstruktur (14) mittels Führungsgehäusen (15) angeordnet sind, die zur Achse der Führungsstruktur (14) senkrecht stehen und mit zumindest einem vertikalen Abstandhalter (17) ausgestattet sind, der sich entlang der Achse der Führungsstruktur (14) erstreckt.

5. Vorrichtung nach einem der vorhergehenden Ansprüche, dadurch gekennzeichnet, dass die Mittel (13) zum Verriegeln der Steuerstange (9) der Stabbündel (4) der zweiten Schar in der angehobenen Position und zum Entriegeln derselben gebildet sind durch:

– zwei Klinken (25), deren Achsen (26) an einem Gehäuse (21) fixiert sind, das im Inneren der dichten Hülle (11) befestigt ist, und die in eine in der Steuerstange (9) ausgebildete Nut (28) eingreifen können,

– eine Drehhülse (20), die mit zwei Nocken (29 und 30) versehen ist, von denen einer (29) befähigt ist, die Klinken (25) zu öffnen, und der andere befähigt ist, die Klinken (25) zu schliessen, und

– Mittel (31, 32) zum Drehen der Drehhülse (20), wenn die Steuerstange (9) sich axial bewegt.

6. Vorrichtung nach Anspruch 5, dadurch gekennzeichnet, dass die Mittel zum Drehen der Drehhülse (20) bei einer Axialbewegung der Steuerstange durch eine axial translatorisch bewegliche Hülse (33) gebildet sind, welche mit zwei Zapfen (32) ausgestattet ist, die mit geneigten Rampen (31) zusammenwirken, welche in der Drehhülse (20) ausgebildet sind, wobei die Hülse eine Schulter (34') aufweist, an welcher eine Schrägfläche (34) der Steuerstange (9) angreift, wenn diese sich nach oben bewegt.

## Claims

1. Device for controlling the core of a nuclear reactor comprising a vessel containing a pressurized fluid in which is immersed the core constituted of vertically arranged fuel assemblies, comprising a first set of clusters (3) arranged for being guided and inserted more or less deeply in some assemblies and a second set of clusters (4) arranged for being completely inserted into some assemblies during only part of the core operating cycle, each of the clusters (3, 4) consisting of a plurality of mutually parallel rods arranged for vertically moving within the assemblies and within a single cluster rod guiding structure (14), rigidly connected to a pommel (5, 6) arranged for movement within a guiding sleeve (7, 7') placed within the guiding structure and extended by a vertically movable drive shaft (8, 9), wherein the means for moving the drive shafts (8) of the clusters of the first set are conventional means having electromagnetic coils and pawls and the means for moving the drive shafts (9) of the clusters of the second set are hydraulic means, said drive shaft (9) being movable within a fluid-tight enclosure (11) which communicates with the vessel and in which an underpressure may be generated, wherein means are provided for locking the drive shafts of the clusters of the second set in a higher position and for unlocking it and wherein two unsymetrical clusters (3, 4) are associated to one fuel element out of two, namely a cluster of the first set (3) and a cluster of the second set (4) whose guiding sleeves (7, 7') are located symetrically with respect to the axis of the guiding structure (14) associated to said assembly (1), the means for guiding and moving the two cluster pommels (8, 10, 10'; 9, 13) being wholly independent from each other.

2. Control device according to claim 1, characterized in that the guiding structures associated to the fuel assemblies (1) are of polygonal shape.

3. Control device according to claim 1 or 2, characterized in that the unit formed by the pommel and the drive shaft (6, 9; 5, 8) of each cluster (3, 4) is provided with at least one pair of slide blocks for guiding said unit inside and along the sleeve (7, 7') in which it moves.

4. Device according to any one of claims 1, 2 or 3, characterized in that the guiding sleeves (7, 7') are held in position inside the guiding structure (14) by guide plates (15) which are perpendicular to the axis of the guiding structure (14) and provided with at least one vertical tie rod (17) extending along the axis of the guiding structure (14).

5. Device according to any one of the preceding claims, characterized in that the means (13) for locking the drive shaft (9) of the clusters (4) of the second set in a higher position and for unlocking said shaft consists of:

– two pawls (25) whose axes (26) are fixed to a casing (21) fixed inside said fluid-tight enclosure (11) and which are capable of engaging in a groove formed in the drive shaft (9),

– a rotatable bush (20) fitted with two cams (29 and 30) one of which (29) is capable of opening the pawls (25) and the other (30) is capable of closing the pawls (25), and

– means (31, 32) for turning the rotatable bush (20) when the drive shaft (9) moves axially.

6. Device according to claim 5, characterized in that the means for turning the rotatable bush (20) when the drive shaft (9) moves axially comprises a longitudinally movable thimble (33) carrying two studs (32) arranged for cooperating with inclined surfaces (31) machined in the rotatable bush (20) and provided with a shoulder (34') which a chamfered shoulder (34) of the drive shaft (9) abuts when the latter moves upwards.

Fig 1

Fig 8

Fig 9

Fig 11

Fig 10

Fig 2

0 151 082

Fig 3

Fig 4

Fig 5

# FIG.6.

# FIG.7.

# FIG.12.

| | Verrouil. | | Déverrouil | |
|---|---|---|---|---|
| | Ouv | Fer | Ouv | Fer |

CLIQUETS OUVERTS
CLIQUETS FERMES
(CLIQUETS FERMES)
Tige verrouillée
(CLIQUETS OUVERTS)

12

37 38 39 40

P4 P5 P6 P7 P4

17